**Europäisches Patentamt**

**European Patent Office**

**Office européen des brevets**

(11) Veröffentlichungsnummer: **0 468 980 B1**

(12) **EUROPÄISCHE PATENTSCHRIFT**

(45) Veröffentlichungstag der Patentschrift: **16.02.94**

(51) Int. Cl.⁵: **G06F 9/44**

(21) Anmeldenummer: **90905423.1**

(22) Anmeldetag: **04.04.90**

(86) Internationale Anmeldenummer:
**PCT/DE90/00263**

(87) Internationale Veröffentlichungsnummer:
**WO 90/13081 (01.11.90 90/25)**

(54) **VERFAHREN ZUR FESTSTELLUNG VON DURCH VEKTORBEFEHLE EINES VEKTORRECHNERS ERSETZBARE ZYKLEN INNERHALB VON BEFEHLSSCHLEIFEN VON FÜR VON NEUMANN RECHNER GESCHRIEBENE PROGRAMME.**

(30) Priorität: **20.04.89 DE 3913011**

(43) Veröffentlichungstag der Anmeldung:
**05.02.92 Patentblatt 92/06**

(45) Bekanntmachung des Hinweises auf die
Patenterteilung:
**16.02.94 Patentblatt 94/07**

(84) Benannte Vertragsstaaten:
**DE GB**

(56) Entgegenhaltungen:
**EP-A- 0 214 751**
**GB-A- 2 186 402**
**JP-A-63 094 368**

**Communications of the ACM, Band 29, Nr. 12, Dezember 1986, (New York, US), D.A. Padua et al.: "Advanced compiler optimizations for supercomputers", Seiten 1184-1201.**

**Proceedings of the 1987 International Confe-**

**rence on Parallel Processing, 17-21. August 1987, The Pennsylvania State University Press, (US), H.B. Coleman: "The vectorizing compiler for the UNISYS ISP", Seiten 567-576.**

(73) Patentinhaber: **SIEMENS AKTIENGESELL-SCHAFT**
**Wittelsbacherplatz 2**
**D-80333 München(DE)**

(72) Erfinder: **RÖSSIG, Stephan**
**Wilhelm-Krüger-Strasse 6**
**D-2900 Oldenburg(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein Verfahren Zur Feststellung von durch Vektorbefehle eines Vektorrechners ersetzbare Zyklen innerhalb von Befehlsschleifen von für von Neumann Rechner geschriebene Programme.

In herkömmlichen Programmiersprachen, wie Pascal, Fortran, Lisp, sind keine einfachen Sprachkonstrukte vorhanden, die explizit Parallelität ausdrücken. Ferner ist die Semantik der vorhandenen Sprachkonstrukte relativ stark an die üblichen Maschinenbefehle eines von Neumann Rechners angepaßt. Dieser enge Zusammenhang zwischen Sprachdefinition und Rechnerarchitektur ermöglicht einem Compiler einfache, syntax-gesteuerte Codegenerierung.

Die Architekturen und Maschinenbefehle von Supercomputern, wie z.B. Vektor- oder Parallelrechnern, unterscheiden sich wesentlich von Neumann Rechnern. Supercomputer ermöglichen die gleichzeitige Ausführung von vielen Operationen, die ein von Neumann Rechner nur sequentiell ausführen kann. Bei der gleichzeitigen (parallelen, vektoriellen) Ausführung mehrerer Operationen muß beachtet werden, daß die einzelnen Operationen voneinander unabhängig sind. Sie dürfen nicht von Berechnungen abhängen, die gleichzeitig zu ihnen ausgeführt werden (Zyklus).

Sollen für von Neumann Rechner geschriebene Programme auf einen Supercomputer ablaufen, dann ist es für eine effiziente Nutzung der angebotenen Rechnerkapazität erforderlich, daß dieses für den von Neumann Rechner geschriebene Programm Befehlsfolgen enthält, die parallel zueinander ausgeführt werden können. Ob eine gleichzeitige Ausführung zulässig ist, wird durch den Kontroll-und Datenfluß des Programmes bestimmt. Dabei ist die Bestimmung des Datenflusses zwischen indizierten Variablenzugriffen von entscheidender Bedeutung. Demgemäß werden die Datenabhängigkeiten zwischen indizierten Variablenzugriffen genauer untersucht. Betrachtet werden im allgemeinen Programmstücke, die Programmschleifen enthalten, z.B. bei Fortran Do-Schleifen. Es wird dann versucht, diese Do-Schleifen mit sequentieller Semantik in äquivalente Schleifen mit vektorieller paralleler Semantik zu transformieren.

Solche Programmschleifen enthalten oft Befehle mit indizierten Variablenvorkommen, auf die ein von Neumann Rechner aufeinanderfolgend zugreifen muß. Wenn die zur Ausführung der Operationen in der Programmschleife notwendigen Operationen unabhängig voneinander ausgeführt werden können, dann kann ein solcher Befehl durch einen entsprechenden Vektorbefehl ersetzt werden. Voraussetzung ist also, daß die zur Ausführung des Befehls erforderlichen Berechnungen nicht von Berechnungen abhängen, die gleichzeitig ausgeführt werden müssen, also daß kein Zyklus vorliegt.

Die Untersuchung der Programme auf diese Eigenschaften erfolgt somit im Prinzip in folgenden Schritten:

1. Bestimmung der Abhängigkeiten zwischen den einzelnen Variablenvorkommen im Rumpf einer Befehlsschleife des zu untersuchenden Programmes.

2. Untersuchung des Prüfungsergebnisses nach 1. daraufhin, ob die Schleife keinen Zyklus enthält. Ist dies der Fall, kann die Schleife vollständig vektorisiert werden.

Aus Proceedings of the 1987 International Conference on Parallel Processing, 17 - 21.August 1987, The Pennsylvania State University Press, Seiten 567 - 576, ist ein Verfahren bekannt, das sich mit der Feststellung von durch Vektorbefehle eines Vektorrechners ersetzbare Befehlsfolgen innerhalb von für von Neumann Rechnern geschriebenen Programmen beschäftigt. Dabei werden Datenabhängigkeiten und Kontrollabhängigkeiten untersucht. Lösungen zur Vektorisierung von Programmschleifen, die einen Zyklus enthalten, sind nicht angegeben.

Die der Erfindung zugrunde liegende Aufgabe besteht darin, ein Verfahren anzugeben, bei der die Vektorisierung einer Schleife auch möglich ist, wenn diese einen Zyklus enthält. Diese Aufgabe wird gemäß den Merkmalen von Anspruch 1 und 2 gelöst.

Wenn somit der Schleifenrumpf nicht zyklenfrei ist, müßte im Normalfall der Befehl im Zyklus sequentiell ausgeführt werden.

Davon kann dann abgewichen werden, wenn der Zyklus als Ganzes durch einen speziellen Vektorbefehl ersetzt werden kann. Durch das Verfahren ist es möglich, diese entsprechenden Programmsituationen zu erkennen, um sie dann in diese Spezialbefehle umsetzen zu können. Damit werden Schleifen vektorisierbar, die sonst sequentiell ausgeführt werden müßten.

Als Datenabhängigkeit zwischen Vorkommen von Variablen wird festgestellt, in wie weit sie Zugriffe auf dieselbe Speicheradresse verursachen. Datenabhängigkeit besteht zwischen zwei Variablenvorkommen, wenn bei einer Programmausführung die von diesen Vorkommen verursachten Speicherzugriffe auf denselben Speicherplatz erfolgen. Wenn beim ersten Zugriff ein Wert in den Speicher geschrieben wird, sog. schreibendes Variablenvorkommen, und beim nächsten Zugriff dieser Wert wieder aus dem Speicher gelesen wird, sog. lesendes Variablenvorkommen, wird diese Datenabhängigkeit dann flow-Abhängigkeit genannt und in folgenden mit fl bezeichnet. Zur Beurteilung ist weiterhin notwendig, daß untersucht wird, ob die flow-Abhängigkeit bei verschiedenen Iterationen durch die Schleife auftritt oder bei derselben Iteration. Im folgenden wird die flow-Abhängigkeit mit $fl^+$ bezeichnet, wenn bei einer Iteration ein schreibender Zugriff zu der Speicheradresse erfolgt und bei der nächsten Iteration ein lesender Zugriff zu dieser Speicheradresse. Die Datenabhängigkeit wird dagegen mit $fl^-$ bezeichnet, wenn die beiden Zugriffe auf die Speicheradresse in derselben Iteration erfolgt. Der erste Fall wird auch mit loopcarried bezeichnet, der zweite Fall als loop independent.

Es gibt noch weitere Datanabhängigkeiten, wie z.B. die Antiabhängigkeit, bei der festgestellt wird, ob zuerst ein lesender Zugriff zu einer Speicheradresse erfolgt und anschließend ein schreibender Zugriff zu dieser Speicheradresse.

Die Datenabhängigkeit untersucht also, welche Reihenfolge bei den einzelnen Speicherzugriffen eingehalten werden muß. Die Zugriffsreihenfolge unterliegt jedoch noch weiteren Bedingungen, die sich aus der Ausführungslogik eines Programmes ergeben. Diese Abhängigkeiten werden als Kontrollabhängigkeiten bezeichnet. Wenn ein sog. Zuweisungsbefehl vorliegt, bei dem die Ausführung einer Zuweisung zuerst die Berechnung der rechten Seite des Befehles voraussetzt, also erst dann der schreibende Variablenzugriff ausgeführt werden kann, dann liegt eine rl-Abhängigkeit vor. Sie startet in dem lesenden Variablenvorkommen der rechten Seite des Befehles und endet in den schreibenden Vorkommen der linken Seite der Zuweisung. Entsprechendes gilt für die sog. Indexabhängigkeit, die jeweils lesende Variablenvorkommen in einem Ausdruck auf Indexpositionen mit dem indizierten Variablenzugriff verbindet. Sie startet jeweils in einem Variablenvorkommen eines Indexausdrucks und endet in dem indizierten Zugriff.

Als Spezialbefehl, der einen Zyklus ersetzen kann, kann ein Vektorbefehl verwendet werden, der die Summe der Komponenten eines Vektors berechnet oder ein Vektorbefehl, mit dem die Bildung einer arithmetischen Reihe möglich ist.

Kann ein Zyklus gemäß dem zweiten Fall ersetzt werden, ist des öfteren eine weitere Optimierung möglich. Oft treten die Werte einer solchen arithmetischen Reihe als Indexwerte in indizierten Variablenzugriffen auf. In diesen Fällen ist es dann möglich, die entsprechenden Speicherzugriffe durch Vektormaschinenbefehle zum direkten Laden bzw. Speichern von Vektoren auszuführen. Dies führt zu einer wesentlichen Verbesserung der Programmlaufzeit.

Wird ein Vektorbefehl verwendet, mit dem die Vektorsumme berechenbar ist, dann muß die zu untersuchende Programmschleife einen Zyklus mit einem Zuweisungsbefehl enthalten, in dem Variablenvorkommen auf der linke und rechten Seite auftreten und die Datenabhängigkeit bzw. Kontrollabhängigkeit zwischen den Variablenvorkommen folgende Bedingungen erfüllen:

- jedes Variablenvorkommen des Zyklus ist an genau einer fl- und einer rl-Abhängigkeit beteiligt,
- es gibt genau eine $fl^+$-Abhängigkeit in dem Zyklus,
- die Variablenvorkommen müssen zu demselben Programmstück gehören,
- die lesenden Variablenvorkommen treten in den Zuweisungsausdrücken als Summanden auf.

Soll dagegen ein Befehl zur Bildung der arithmetischen Reihe bzw. eine daraus folgende Optimierung verwendet werden, dann muß das Programmstück mit dem Zyklus in der Schleife folgende Bedingung erfüllen:

- jedes Variablenvorkommen des Zyklus ist an genau einer fl- und einer rl- Abbhängigkeit beteiligt, so daß das andere Variablenvorkommen der Abhängigkeit ebenfalls zum Zyklus gehört,
- von genau einem schreibenden Vorkommen geht eine $fl^+$-Abhängigkeit zu einem lesenden Vorkommen des Zyklus,
- von schreiben den Variablenvorkommen können weitere $fl^-$-Abhängigkeiten vorliegen, die aus den Zyklus herausführen,
- die Variablenvorkommen gehören zu demselben Programmstück,
- die lesenden Vorkommen treten in den Zuweisungsausdrücken als Summanden auf,
- die Zuweisungsausdrücke ohne das in ihnen enthaltene Vorkommen des Zyklus repräsentieren für die Schleife jeweils konstante Ausdrücke.

Zur Erläuterung des Verfahrens ist es zweckmäßig, die Datenabhängigkeiten und Kontrollabhängigkeiten von derartigen Befehlsschleifen mit Hilfe einer grafischen Darstellung zu zeigen. Es wird dazu ein sog. Graph entwickelt, der aus Knoten und Kanten besteht. Dabei werden den Variablenzugriffen in den Befehlen Knoten zugeordnet und die Beziehungen zwischen den Befehlen und innerhalb der Befehle mit Kanten dargestellt. Lesende Variablenvorkommen in den Befehlen werden als use-Knoten realisiert, schreibende Variablenvorkommen, d.h. bei Vorkommen auf der linken Seite eines Zuweisungsbefehls, als def-Knoten. Region-Knoten werden eingesetzt, wenn während der Programmausführung bestimmte Bedingungen eintreten können, deren Eintritt die Ausführung von bestimmten Teilen des Programmes zur Folge hat. Ein region-Knoten wird z.B. als Beginn des Rumpfes einer Programmschleife verwendet, dieser Region-Knoten wird mit Root angegeben. Weiter mögliche Knoten sind z.B. expr-Knoten, sie korrespondieren zu den Bedingungsausdrücken in if-Anweisungen. Ein ind-Knoten korrespondiert schließlich zu den Vorkommen der Laufvariablen der Programmschleife.

Die Datenabhängigkeiten und die Kontrollabhängigkeiten zwischen Vorkommen der Skalaren Variablen werden durch die gerichteten Kanten zwischen den Knoten gezeichnet. Bei den Kontrollabhängigkeiten werden die oben angegebenen Abhängigkeiten rl, Index verwendet, zusätzlich die exec-Abhängigkeit, die die Abhängigkeit der einzelnene Knoten von einem region-Knoten angeben Als Datenabhängigkeiten werden die flow-Abhängigkeit und die anti-Abhängigkeit verwendet.

Mit Hilfe von zwei Ausführungsbeispielen wird die Darstellung von solchen Programmschleifen oder Teilen von Programmschleifen, die einen Zyklus enthalten, mit Hilfe eines derartigen Graphen gezeigt und dabei erläutert, wie Zyklen erkennbar sind, die durch spezielle Vektorbefehle wie Vektorsumme oder arithmetische Reihe ersetzbar sind.

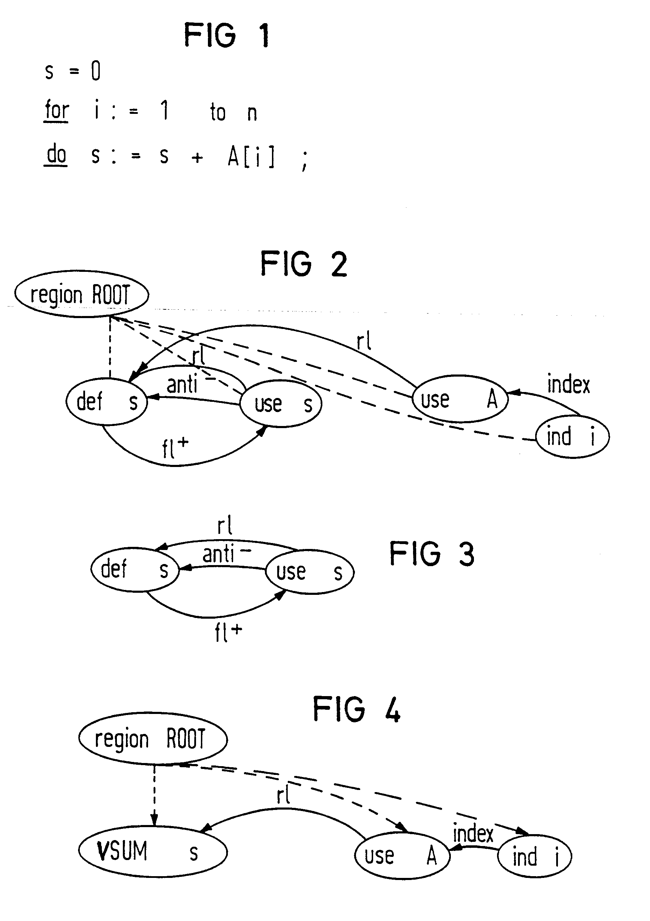

Im ersten Ausführungsbeispiel wird erläutert, wie ein Befehl Vektorsumme, in folgendem vsum bezeichnet, zur Ersetzung eines Zyklus verwendet werden kann. Ausgegangen wird von einem Programmstück, das in Figur 1 dargestellt ist. Dieses Programmstück enthält eine "for" Schleife, die eine Iteration von $i = 1$ bis n ausführt. Dabei soll der Zuweisungsbefehl $s := s + A(i)$ ausgeführt werden. Der rechte Zuweisungsausdruck besteht aus $s + A(i)$. Es ist erkennbar, daß es sich um einen Zyklus handelt, da die Berechnung der linken Seite des Zuweisungsbefehls, nämlich von s, davon abhängt, daß vorher das s der rechten Seite des Befehles, also des Zuweisungsausdruckes, vorliegt. Da s bei jeder Iteration durch die Schleife einen neuen Wert erhält, der bei der nächsten Iteration verwendet wird, ist eine parallele Ausführung an sich nicht möglich.

Zunächst werden die Datenabhängigkeiten und die Kontrollabhängigkeiten des Programmstückes mit Hilfe eines Graphen dargestellt, der in Figur 2 gezeichnet ist. Der Graph beginnt mit einem region- Knoten, hier dem root-Knoten. Für die lesenden Variablenvorkommen des Zuweisungsbefehles werden jeweils use-Knoten verwendet, z.B. use s, use A, für das Schreiben der Variablenvorkommen ein def-Knoten, nämlich def s und schließlich für das Vorkommen der Laufvariablen i ein ind-Knoten. Die Datenabhängigkeiten sind mit $fl^+$ und $anti^-$ angegeben, die Kontrollabhängigkeiten als rl und Index. Weiterhin ist gestrichelt dargestellt, daß alle Knoten vom region-Knoten abhängen. Dies ist die sog. exec-Abhängigkeit.

Mit Hilfe eines bekannten Verfahrens, das z.B. aus R. E. Tarjan; Depth - First Search and Linear Graph Algorithms; SIAM J. Computing Vol 1. Nr.2. June 1972, entnehmbar ist, wird festgestellt, ob ein Zyklus vorliegt. Bei der weiteren Schilderung wird dies vorausgesetzt. Diese Untersuchung liefert, daß genau ein einziger Zyklus im Programmstück vorhanden ist, der in Figur 3 dargestellt ist.

Anhand des sog. CDG/SDG Graphen (CDG = control dependence graph, SDG = scalar dependence graph) werden nun die Kontrollabhängigkeiten und die Datenabhängigkeiten der Knoten im Zyklus überprüft und dabei festgestellt, daß zwischen dem use-Knoten und dem def-Knoten jeweils eine $fl^+$-Datenabhängigkeit und eine rl-Kontrollabhängigkeit besteht. Es ergibt sich ein fl-rl-Kreis mit genau einer $fl^+$ Kante. Von dem def-Knoten geht also genau eine $fl^+$ Kante aus, der Zyklus kann somit eventuell von dem Vektorbefehl vsum ersetzt werden.

Die $fl^+$-Abhängigkeit ist gegeben, weil in einer Iteration ein schreibender Zugriff zu der Speicheradresse von s erfolgt, bei der nächsten Iteration ein lesender Zugriff zu dieser Speicheradresse. Eine rl-Abhängigkeit ist gegeben, da die Ausführung des Zuweisungsbefehles die Berechnung der rechten Seite des Zuweisungsbefehles erfordert.

Weiterhin kann aus Figur 2 entnommen werden, daß die Knoten def s und use s vom region-Knoten Root abhängig sind, dies ist durch die exec-Kanten gezeigt.

Ein Test auf Summeneigenschaft des Zuweisungsausdruckes, also der Variablenvorkommen von s in dem Zuweisungsausdruck auf der rechten Seite der Zuweisung, ergibt, daß der use-Knoten ein positiver Summand ist. Damit ist festgelegt, daß der Zyklus eine Vektorsumme ist und durch den Vektorbefehl vsum ersetzbar ist.

Die Abstraktion des Zyklus zu einem vsum-Knoten zeigt Figur 4. Es ist zu sehen, daß der Gegenstand der Figur 3 jetzt durch den Vektorbefehl vsum s ersetzt worden ist. Die übrigen Abhängigkeiten zwischen den region-Knoten use A zu dem Zyklus und region- Knoten bleiben erhalten, wie dies aus Figur 4 auch erkennbar ist.

Da es nur ein indiziertes Variablenvorkommen, nämlich use A, gibt, gibt es keine Datenabhängigkeit zu weiteren Variablenvorkommen, sodaß ein PDG-Graph (programm dependence graph) dem in Figur 2 dargestellten Graph entspricht. Ein PDG-Graph würde weiterhin Datenabhängigkeiten Zwischen mehreren Variablenvorkommen zeigen. Es ergibt sich, daß in dem abstrahierten Graph nach Figur 4 kein Zyklus mehr vorhanden ist, so daß die Programmschleife nun zyklenfrei und daher vektorisierbar ist. Eine sinnvolle Sortierung des Graphen ist in Figur 5 dargestellt.

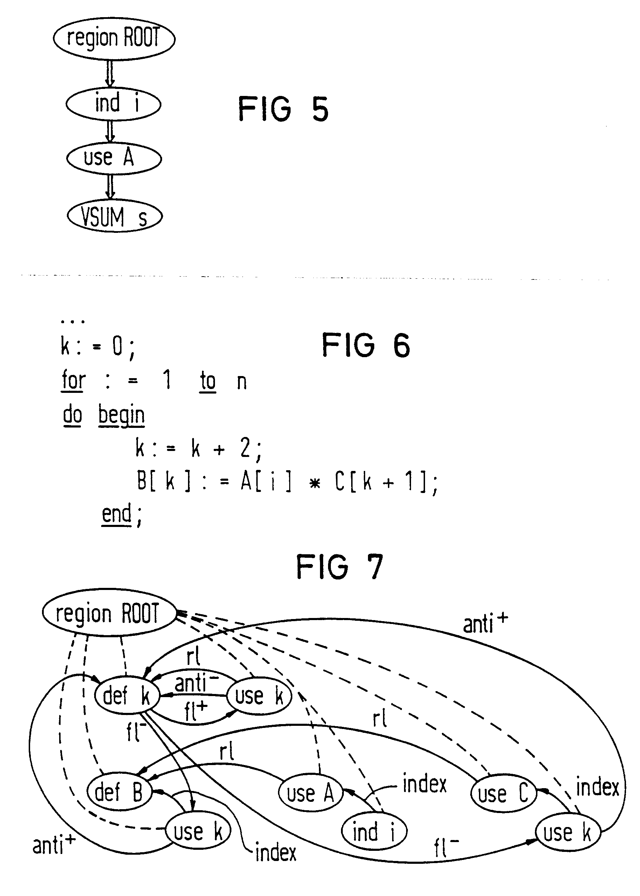

In einem zweiten Ausführungsbeispiel wird ein Programmstück gezeigt, das eine Programmschleife enthält, bei dem aber der Zuweisungsbefehl als Summand einen konstanten Wert enthält. In Figur 6 ist dieses Programmstück gezeigt, es besteht aus dem Zuweisungsbefehl $k := k + 2$ und aus dem Zuweisungsbefehl $B(k) = A(i) * C(k + 1)$.

Für dieses Programmstück wird wieder der CDG/SDG Graph erstellt, der in Figur 7 gezeigt ist. Es werden für die rechte Seite der Zuweisungsbefehle use-Knoten für Variablenvorkommen und ind-Knoten für Vorkommen von Laufvariablen verwendet. Die Variable K + 1 hängt von der Berechnung des voran gehenden Zuweisungsbefehles ab und wird damit als use k Knoten dargestellt. Die Datenabhängigkeiten und Kontrollabhängigkeiten sind in Figur 7 eingezeichnet.

Es ist zu sehen, daß alle Knoten von den region Root Knoten abhängen und somit zum selben Programmstück gehören.

Nach Ermittlung, daß ein Zyklus im Programmstück vorliegt, nämlich beim Befehl k: = k + 2, werden die Kanten dieses Zyklus gesucht, die zwischen dem def-Knoten und dem use-Knoten bestehen. Es ergibt sich, daß der Zyklus fl-rl-Kreis Eigenschaft erfüllt und daß es genau eine $fl^+$ Kante im Zyklus gibt. Damit kann dieser Zyklus eventuell durch einen Vektorbefehl ersetzt werden. In Frage käme dabei der vsum-Befehl; jedoch besteht ein Unterschied zum ersten Ausführungsbeispiel darin, daß von dem def k Knoten weitere fl Kanten ausgehen, aber $fl^-$ Kanten und zwar deshalb, weil hier eine Datenabhängigkeit in derselben Iteration durch die Schleife gegeben ist. Vom def-Knoten geht also eine $fl^+$-Kante und zwei $fl^-$-Kanten aus. Damit ist dieser Zyklus nicht durch den Befehl vsum ersetzbar, höchstens durch den Befehl für die arithmetische Reihe, der EIV genannt werden soll. Solche Zyklen werden auch Induktionsvariable genannt, da bei jeder Iteration die Variable sich um einen Schleifen konstanten Wert verändert.

Der Test auf Summeneigenschaft ergibt, daß der use k Knoten im Zyklus positiv ist.

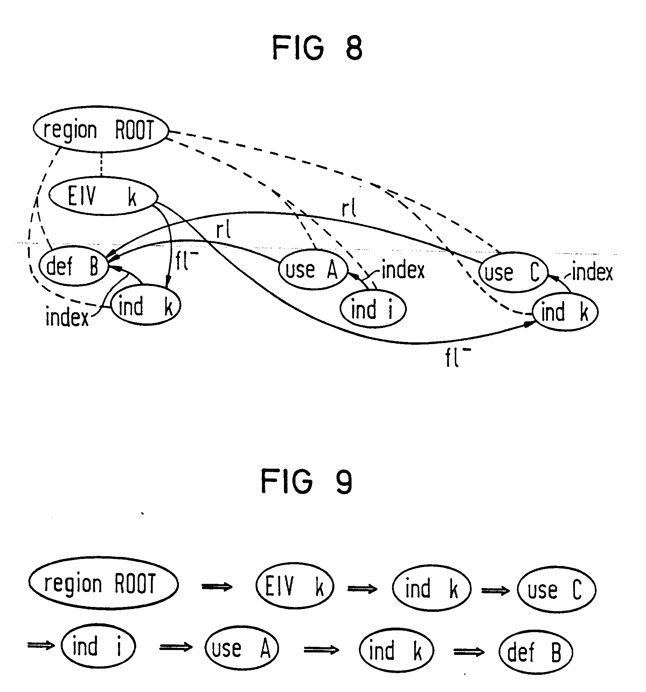

Der Test auf Induktionsvariable fällt positiv aus, da die rechte Seite der Zuweisung k: = k+2 neben dem Vorkommen der Variablen k nur noch die Konstante 2 enthält. Damit bildet dieser Zyklus eine Induktionsvariable. Der Zyklus kann durch den Vektorbefehl EIV ersetzt werden, dies zeigt Figur 8. Die sonstigen Kanten bleiben erhalten wie dies ebenfalls aus Figur 8 erkennbar ist. Weiterhin sind in Figur 8 zwei use k Knoten in ind k Knoten umgewandelt worden und die von diesen Knoten ausgehenden $anti^+$-Kanten gelöscht worden.

Da keine Datenabhängigkeiten zwischen den indizierten Variablenvorkommen bestehen, ist der program dependence graph identisch mit dem in Figur 8 dargestellten Graph. Eine Vektorisierung ist also möglich, da der PDG Graph zyklenfrei ist. Figur 9 zeigt eine mögliche topologische Sortierung.

In allgemeineren Worten erfolgt die Feststellung von Zyklen, die durch die Befehle vsum zur Bildung der Vektorsumme oder durch den Befehl EIV zur Bildung der arithmetischen Reihe ersetzt werden kann, in folgenden Schritten: nach dem zitierten Verfahren wird festgestellt, ob das untersuchte Programmstück Zyklen enthält. Für jeden gefundenen Zyklus wird dann getrennt ermittelt, ob er die Eigenschaften hat, aufgrund deren die Ersetzung durch den Befehl vsum oder EIV möglich ist. Dabei wird der Zyklus auf diese Eigenschaften so lange hin untersucht, bis eine erforderliche Eigenschaft nicht mehr zutrifft. In diesem Fall wird die Analyse des Zyklus abgebrochen. Im einzelnen werden folgende Tests durchgeführt:

1. Test auf fl-rl-Eigenschaft.

Es wird ein Test auf fl-rl-Kreiseigenschaft mit einer loop carried flow-Abhängigkeit ausgeführt. Die fl-rl-Kreiseigenschaft besagt, daß von jedem Knoten des Zyklus genau eine Kante vom Typ rl oder flow, zu genau einem anderen Knoten des Zyklus führt. Ferner muß genau eine dieser flow-Kanten loop carried sein ($fl^+$).

Diese Eigenschaft wird überprüft, indem für jeden Knoten des Zyklus mittels seiner Nachfolgerliste alle ausgehenden Kanten überprüft werden. Wird dabei ein Knoten gefunden, der zwei control/flow Nachfolger im Zyklus hat, so wird die Untersuchung mit einer Fehlmeldung abgebrochen. Ferner erfolgt ein Abbruch, wenn eine zweite loop-carried-flow-Kante ($fl^+$) gefunden wird. Eine derartige Kante existiert aber immer.

Bei der Überprüfung der ausgehenden Kanten wird ferner für jeden def-Knoten die Anzahl der von ihm startenden flow-Kanten getrennt nach loop-carried und loop-independent ermittelt. Geht von jedem def Knoten genau eine flow-Kante aus, so ist der Zyklus ein Kandidat für die Vektorsumme. Andernfalls ist er ein Kandidat für die Induktionsvariable, sofern für die ausgehenden flow-Kanten, deren Senken (das sind die jeweiligen Zielknoten) nicht im Zyklus liegen, folgendes gilt: Wenn die flow-Kante loop-carried ist, so muß von ihrer Quelle (das ist ihr Startknoten) aus eine loop-carried-flow-Kante zu einem Knoten des Zyklus führen. Dabei kann eine solche Kante nur von einem def-Knoten ausgehen.

Ferner muß der Zyklus dahingehend überprüft werden, ob seine Knoten alle von demselben region-Knoten exec-abhängig sind. Ist dies nicht der Fall, so wird die Analyse ebenfalls abgebrochen.

Wenn alle bisherigen Tests positiv ausgefallen sind, so liegt folgende Situation vor: der Zyklus enthält nur def und use-Knoten. Von jedem use-Knoten startet genau eine Kontrollabhängigkeit und diese ist eine rl-Kante und sie endet in einem def-Knoten des Zyklus. Von jedem def-Knoten startet genau eine flow-Kante, deren Senke ein use-Knoten des Zyklus ist. Jeder use-Knoten des Zyklus korrespondiert zu einem Variablenvorkommen in einem Zuweisungsausdruck auf der rechten Seite eines Zuweisungsbefehles.

2. Test auf Summandeneigenschaft.

Für jeden use-Knoten des Zyklus wird geprüft, ob das zu ihm gehörige Variablenvorkommen als Summand in dem jeweiligen Zuweisungsausdruck auftritt und wenn ja, als positiver oder negativer Summand. Falls alle use-Knoten diese Summandeneigenschaften erfüllen und ferner die Anzahl der negativen Summanden gerade ist, so liegt, falls der Zyklus Kandidat für eine Vektorsumme ist, eine solche vor. Ist der Zyklus Kandidat für eine Induktionsvariable, so muß noch eine weitere Eigenschaft für den Zuweisungsausdruck überprüft werden.

3. Test auf Induktionsvariable.

Eine Induktionsvariable zeichnet sich dadurch aus, daß sich ihr Wert in den einzelnen Iterationen jeweils um denselben Betrag ändert. Aufgrund des vorhergehenden Schrittes ist klar, daß der Zuweisungsausdruck Summenausdrücke enthält. Es muß nur noch überprüft werden, ob die Werte aller Operanden in diesen Ausdrücken, mit Ausnahme der zu den use-knoten korrespondierenden Variablenvorkommen, für die Ausführung der Schleife konstant sind. Dies ist der Fall, wenn die Operanden Konstanten sind oder Vorkommen von Variablen, denen im Rumpf der Schleife kein neuer Wert zugewiesen wird.

4. Integration in den Abhängigkeitsgraphen.

Falls der Zyklus die Vektorsummen - oder Induktionsvariablen - Eigenschaft erfüllt, so wird in einem letzten Schritt dieses Ergebnis durch Abstraktion des Zyklus zu einem neuen Knoten im Abhängigkeitsgraphen festgehalten. Eine Vektorsumme wird durch einen vsum Knoten, eine Induktionsvariable durch einen EIV-Knoten ersetzt. Dies läuft in den folgenden Teilschritten ab:

- Es wird ein neuer Knoten vom Typ vsum bzw. EIV erzeugt. Dieser Knoten ist execabhängig von demjenigen region-Knoten, der der exec Vorgänger der Knoten des Zyklus ist.
- Alle Kanten, die von einem Knoten außerhalb des Zyklus starten und in einen Knoten des Zyklus enden, erhalten als neue Senke den vsum bzw. EIV-Knoten.
- Für den Fall daß eine Induktionsvariable vorliegt, werden alle use-Knoten, die flow-Nachfolger von Knoten des Zyklus sind und nicht im Zyklus liegen, in ind-Knoten umgewandelt. Diese ind-Knoten erhalten den zugehörigen EIV-Knoten als $fl^-$- bzw. $fl^+$-Vorgängerknoten. Gemäß der Eigenschaften der Induktionsvariable existiert wenigstens ein solcher use Knoten.

- Alle Knoten des Zyklus und die mit ihnen verbundenen Kanten werden aus dem Abhängigkeitsgraphen entfernt.

**Patentansprüche**

1. Verfahren zur Feststellung von durch Vektorbefehle eines Vektorrechners ersetzbare Zyklen innerhalb von für von Neumann Rechnern geschriebenen Programmen,
   - bei dem nach Ermittlung eines Zyklus Befehle von Befehlsschleifen daraufhin untersucht werden, ob Kontrollabhängigkeiten und Datenabhängigkeiten zwischen den in den Befehlen des Zyklus enthaltenden skalaren Variablenvorkommen bestehen und
   - bei dem in der Befehlsschleife enthaltene Befehle durch einen Befehl zur Berechnung der Vektorsumme ($V_{sum}$) dann ersetzt werden, wenn folgende Bedingungen erfüllt sind:
   a) jedes Variablenvorkommen des Zyklus ist an genau einer fl- und einer rl-Abhängigkeit beteiligt,
   b) es gibt genau eine $fl^+$ Abhängigkeit im Zyklus,
   c) die Variablenvorkommen gehören zu demselben Programmstück,
   d) die lesenden Variablenvorkommen treten in Zuweisungsausdrücken als Summanden auf, wobei
   fl die Datenabhängigkeit darstellt, bei der zuerst ein schreibender Zugriff zum Variablenvorkommen und anschließend ein lesender Zugriff zum Variablenvorkommen erfolgt,
   $fl^+$ die Datenabhängigkeit darstellt, wenn zuerst ein schreibender Zugriff zum Variablenvorkommen und anschließend ein lesender Zugriff zum Variablenvorkommen erfolgt und die Zugriffe in verschiedenen Iterationen der Befehlsschleife erfolgen, rl die Kontrollabhängigkeit angibt, wenn ein Zuweisungsbefehl mit einem Zuweisungsausdruck mit mindestens einem Variablenvorkommen auf der rechten Seite des Befehles vorliegt, bei dessen Ausführung ein lesender Zugriff auf die Variablenvorkommen im Zuweisungsausdruck erfolgt und die zugewiesenen Werte im schreibenden Zugriff als schreibendes Variablenvorkommen abgespeichert wird.

**2.** Verfahren zur Feststellung von durch Vektorbefehle eines Vektorrechners ersetzbare Zyklen innerhalb von für Neumann-Rechnern geschriebenen Programmen,

- bei dem nach Ermittlung eines Zyklus Befehle von Befehlsschleifen daraufhin untersucht werden, ob Kontrollabhängigkeiten und Datenabhängigkeiten zwischen den in den Befehlen enthaltenen skalaren Variablenvorkommen bestehen und
- bei dem in der Befehlsschleife enthaltene Befehle durch einen Befehl zur Berechnung der arithmetischen Reihe (EIV) dann ersetzt werden, wenn folgende Bedingungen erfüllt sind:

a) jedes Variablenvorkommen des Zyklus ist genau an einer fl- und einer rl- Abhängigkeit beteiligt,

b) es gibt genau eine $fl^+$- Abhängigkeit im Zyklus,

c) von schreibenden Variablenvorkommen können weitere $fl^-$ Abhängigkeiten vorliegen, die aus dem Zyklus herausführen,

d) die Variablenvorkommen gehören zu demselben Programmstück,

e) die lesenden Variablenvorkommen treten in den Zuweisungsausdrücken als Summanden auf,

f) die Zuweisungsausdrücke ohne die in ihnen enthaltenen Variablenvorkommen enthalten für die Schleife jeweils konstante Ausdrücke, wobei fl die Datenabhängigkeit darstellt, bei der zuerst ein schreibender Zugriff zum Variablenvorkommen und anschließend ein lesender Zugriff zum Variablenvorkommen erfolgt, wobei $fl^+$ die Datenabhängigkeit darstellt, wenn zuerst ein schreibender Zugriff zu einem Variablenvorkommen und anschließend ein lesender Zugriff zu einem Variablenvorkommen erfolgt und die Zugriffe in verschiedenen Iterationen der Befehlsschleife erfolgen,

$fl^-$ die Datenabhängigkeit darstellt, wenn zuerst ein schreibender Zugriff zu einem Variablenvorkommen und anschließend ein lesender Zugriff zum Variablenvorkommen erfolgt und die Zugriffe in derselben Iteration der Befehlsschleife erfolgt,

rl die Kontrollabhängigkeit angibt, wenn ein Zuweisungsbefehl mit einem Zuweisungsausdruck mit mindestens einem Variablenvorkommen auf der rechten Seite des Befehls vorliegt, bei dessen Ausführung ein lesender Zugriff auf die Variablenvorkommen im Zuweisungsausdruck erfolgt und die zugewiesenen Werte im schreibenden Zugriff als schreibendes Variablenvorkommen abgespeichert wird.

**Claims**

**1.** Method for determining cycles replaceable by vector instructions of a vector computer within programs written for von Neumann computers,

- in which, after determination of a cycle, instructions of instruction loops are examined to see whether control dependencies and data dependencies between the scalar variable occurrences contained in the instructions of the cycle exist, and
- in which instructions contained in the instruction loop are replaced by an instruction for calculating the vector sum ($V_{sum}$) whenever the following conditions are fulfilled:

a) each variable occurrence of the cycle participates in exactly one fl and one rl dependency,

b) there is exactly one $fl^+$ dependency in the cycle,

c) the variable occurrences belong to the same program section,

d) the read variable occurrences appear as summands in assignment expressions, where

fl represents the data dependency in which first a write access to the variable occurrence and then a read access to the variable occurrence is made,

$fl^+$ represents the data dependency when first a write access to the variable occurrence and then a read access to the variable occurrence is made and the accesses are made in different iterations of the instruction loop,

rl indicates the control dependency when an assignment instruction is present with an assignment expression with at least one variable occurrence on the right side of the instruction, during the execution of which a read access is made to the variable occurrences in the assignment expression and the assigned values are stored in the write access as a write variable occurrence.

**2.** Method for determining cycles replaceable by vector instructions of a vector computer within programs written for von Neumann computers,

- in which, after determination of a cycle, instructions of instruction loops are examined to see whether control dependencies and data dependencies between the scalar variable occurrences contained in the instructions exist, and

- in which instructions contained in the instruction loop are replaced by an instruction for calculating the arithmetic series (EIV) whenever the following conditions are fulfilled:

a) each variable occurrence of the cycle participates in exactly one fl and one rl dependency,

b) there is exactly one $fl^+$ dependency in the cycle,

c) further $fl^-$ dependencies of write variable occurrences which lead out of the cycle may be present,

d) the variable occurrences belong to the same program section,

e) the read variable occurrences appear as summands in the assignment expressions,

f) the assignment expressions without the variable occurrences contained therein contain constant expressions for the loop in each case, where

fl represents the data dependency in which first a write access to the variable occurrence and then a read access to the variable occurrence is made,

$fl^+$ represents the data dependency when first a write access to a variable occurrence and then a read access to a variable occurrence is made and the accesses are made in different iterations of the instruction loop,

$fl^-$ represents the data dependency when first a write access to a variable occurrence and then a read access to the variable occurrence is made and the accesses are made in the same iteration of the instruction loop, rl indicates the control dependency when an assignment instruction is present with an assignment expression with at least one variable occurrence on the right side of the instruction, during the execution of which a read access is made to the variable occurrences in the assignment expression and the assigned values are stored in the write access as a write variable occurrence.

## Revendications

1. Procédé pour déterminer des cycles, pouvant être remplacés par des instructions vectorielles d'un calculateur vectoriel, a l'intérieur de programmes écrits pour des ordinateurs de Neumann, selon lequel

- après détermination d'un cycle, des instructions de boucles d'instructions sont examinées pour déterminer a il existe des dépendances de contrôle et des dépendances de données entre les évènements scalaires de variables, qui sont contenues dans les instructions du cycle, et

- des instructions contenues dans la boucle d'instructions sont remplacées par une instruction pour le calcul de la somme vectorielle ($V_{somme}$) lorsque les conditions suivantes sont satisfaites :

a) chaque évènement de variable du cycle participe à précisément une dépendance de f1 et une dépendance de r1,

b) il existe précisément une dépendance de $f1^+$ dans le cycle,

c) les évènements de variables font partie du même élément de programme,

d) les évènements de variables exécutant une lecture apparaissent dans des expressions d'affectation sous la forme de nombres à additionner,

f1 représentant la dépendance de données, dans laquelle interviennent tout d'abord un accès avec l'enregistrement à l'événement de variable et ensuite un accès avec lecture à l'événement de variable,

$f1^+$ représentant la dépendance de données, lorsqu'il se produit tout d'abord un accès avec l'enregistrement à l'événement de variable et ensuite un accès avec lecture à l'événement de variable et que les accès s'effectuent selon différentes itérations de la boucle d'instruction,

r1 désignant la dépendance de contrôle, lorsqu'une instruction d'affectation est présente avec une expression d'affectation comprenant au moins un évènement de variable, sur le côté droit de l'instruction, lors de l'exécution de laquelle un accès avec lecture est exécuté à l'événement de variable dans l'expression d'affectation et les valeurs affectées sont mémorisées, lors de l'accès avec enregistrement en tant qu'évènement de variable réalisant un enregistrement.

2. Procédé pour déterminer des cycles, pouvant être remplacés par des instructions vectorielles d'un calculateur vectoriel, à l'intérieur de programmes écrits pour des ordinateurs de Neumann, selon lequel

- après détermination d'un cycle, des instructions de boucles d'instructions sont examinées pour déterminer s'il existe des dépendances de contrôle et des dépendances de données entre les évènements scalaires de variables, qui sont contenus dans les instructions, et
- des instructions contenues dans la boucle d'instructions sont remplacées par une instruction pour le calcul de la série arithmétique (EIV) lorsque les conditions suivantes sont satisfaites :
  a) chaque évènement de variable du cycle participe précisément à une dépendance de f1 et une dépendance de r1,
  b) il existe précisément une dépendance de $f1^+$ dans le cycle,
  c) parmi des évènements de variables avec enregistrement, peuvent être présentes d'autres dépendances $f1^-$, qui émanent du cycle,
  d) les évènements de variables appartiennent au même élément de programme,
  e) les évènements de variables exécutant une lecture apparaissent dans des expressions d'affectation sous la forme de nombres additionnés,
  f) des expressions d'affectation sans les évènements de variables contenus dans ces expressions contiennent pour la boucle des expressions constantes respectives, f1 représentant la dépendance des données, dans laquelle interviennent tout d'abord un accès avec l'enregistrement à l'événement de variable et ensuite un accès avec lecture à l'événement de variable,
  $f1^+$ représentant la dépendance de données, lorsqu'il se produit tout d'abord un accès avec l'enregistrement à l'évènement de variable et ensuite un accès avec lecture à l'évènement de variable et que les accès s'effectuent selon différentes itérations de la boucle d'instruction,
  $f^-$ représentant la dépendance des données lorsque tout d'abord un accès avec enregistrement à un évènement de variable est exécuté et qu'ensuite un accès avec lecture à l'évènement de variable est exécuté et que les accès s effectuent dans la même itération de la boucle d'instruction,
  r1 représentant la dépendance de contrôle, lorsqu'une instruction d'affectation est présente avec une expression d'affectation comprenant au moins un évènement de variable, sur le côté droit de l'instruction, lors de l'exécution de laquelle un accès avec lecture à l'évènement de variable est exécuté dans l'expression d'affectation et les valeurs affectées sont mémorisées, lors de l'accès avec enregistrement en tant qu'évènement de variable réalisant un enregistrement.

## FIG 1

s = 0

<u>for</u>  i : = 1   to  n

<u>do</u>  s : = s + A[i] ;

## FIG 2

## FIG 3

## FIG 4

FIG 5

```
...
k : = 0 ;
for : = 1 to n
do begin
        k : = k + 2 ;
        B[ k ] : = A[ i ] * C[ k + 1 ];
    end ;
```

FIG 6

FIG 7

## FIG 8

## FIG 9